# EUROPÄISCHE PATENTSCHRIFT

(11) **EP 0 571 723 B1**
(45) Veröffentlichungstag und Bekanntmachung des Hinweises auf die Patenterteilung: **26.02.1997**
(21) Anmeldenummer: 93103997.8
(22) Anmeldetag: 12.03.1993
(51) Int. Cl.: H02G 3/14, H02G 3/18

(54) **Tableau für Unterputzmontage**
Panel for flush mounting
Tableau pour montage en affleurement

(30) Priorität: 27.05.1992 CH 1726/92
(43) Veröffentlichungstag der Anmeldung: 01.12.1993
(73) Patentinhaber: INVENTIO AG, CH-6052 Hergiswil NW (CH)
(72) Erfinder: Minder, Urs, CH-6005 Luzern (CH); Achermann, Peter, CH-6030 Ebikon (CH)

(56) Entgegenhaltungen:
- DE-C- 577 610
- DE-U- 8 704 274
- DE-U- 9 102 425
- FR-A- 1 215 688

## Beschreibung

Die Erfindung betrifft ein Tableau für Unterputzmontage gemäß dem Oberbegriff des Anspruchs 1.

Aus dem Gebrauchsmuster DE-GM-U1 G 91 02 425.0 ist ein Tableau bestehend aus einem Gehäuse, einer Decktafel und einer Platine mit elektronischen und/oder elektromechanischen Elementen bekannt. Das Gehäuse weist einen Boden und einen Rand mit einem Kragen auf, auf dem ein Flansch der Decktafel aufliegt. Arretierleisten und Schnappkupplungen ermöglichen eine lösbare Verbindung zwischen dem Gehäuse und der Decktafel. Bei Unterputzmontage wird das Gehäuse in einer ersten Variante an einer Wandplatte, beispielsweise an einem Blech befestigt. Mit Hilfe von bügelförmigen Arretiervorrichtungen, die am Boden des Gehäuses festgeschraubt werden und die sich auf die Hinterfläche des Blechs stützen, wird das Gehäuse starr im Platz zwischen den Rändern einer im Blech vorgesehenen, der Grösse des Gehäuses entsprechenden Öffnung festgehalten. In einer weiteren Variante zur Unterputzmontage wird ein kastenförmiges Profilmittelstück bündig in das Oberflächenmaterial eines Mauerwerkes fest eingebettet. Das Gehäuse wird dann in das Profilmittelstück frei eingesetzt und kann aus der Wand losgemacht werden.

Ein Nachteil der bekannten Einrichtung liegt darin, dass zur Unterputzmontage des Gehäuses zusätzliche Einrichtungen wie Bügel, Bleche, Schrauben und Profilmittelstücke notwendig sind, was insbesondere bei grossen Stückzahlen den Aufwand an Montagearbeiten erheblich vergrössert und eine saubere Montage der Decktafel erschwert.

Aus DE 577 610 ist eine mit einem Deckel verschliessbare Dose bekannt geworden, in der eine einschiebbare den Dosenraum überbrückende Feder angeordnet ist. Die einen Apparatesockel tragende Feder weist federnde Schenkel mit scharfen ersten und zweiten Nasen auf, die an der Dosenwand verhaken und dem Apparatesockel einen festen Halt gegen achsiale Verschiebungen geben. Die Federschenkel sind an ihren freien Enden oberhalb der zweiten Nasen mit Haken versehen, die mittels eines Schraubenziehers nach innen drückbar sind. Am Dosendeckel sind Haltefedern angeordnet, die in die zweiten Nasen eingreifen und gleichzeitig die Spannung der Federschenkel erhöhen. Durch das Aufsetzen des Deckels wirkt eine durch die Haltefedern ausgelöste Kraft auf die zweiten Nasen, die dadurch zusätzlich mit der Dosenwand verhaken. Ein nachträgliches Einschieben der Feder ist bei aufgesetztem Dosendeckel nicht möglich.

Diese Spreizbefestigung hat zum Nachteil, dass die Feder lediglich für kleine und vorwiegend runde Dosen oder Gehäuse einsetzbar ist. Bei grösseren Gehäuseabmessungen oder bei kubischen Gehäusen ist eine verdrehsichere Befestigung der zu tragenden Apparate nicht möglich.

Hier will die Erfindung Abhilfe schaffen. Die Erfindung, wie sie in dem Anspruch 1 gekennzeichnet ist, löst die Aufgabe, die Nachteile der bekannten Einrichtung zu vermeiden und ein Tableau mit Befehls- und Meldeelementen für Unterputzmontage zu schaffen, das unabhängig von der Einlasstiefe des zugehörigen in einer Tragstruktur eingebetteten Gehäuses montierbar ist.

Die durch die Erfindung erreichten Vorteile sind im wesentlichen darin zu sehen, dass das Tableau auch bei unterschiedlich tief eingebettetem Gehäuse immer bündig mit der Tragstruktur montierbar ist. Ein weiterer Vorteil ist darin zu sehen, dass bei in der Tiefe wie auch in der Seite schräg eingebettetem Gehäuse ein Ausgleich durch das Tableau möglich ist und von Aussen unsichtbar bleibt. Ein weiterer Vorteil ist darin zu sehen, dass eine Vormontagestellung möglich ist, bei der das bereits voll funktionsfähige Tableau in einem bestimmten Abstand von der Tragstruktur gehalten wird, sodass an dem vom Tableau überdeckten Teil der Tragstruktur abschliessende handwerkliche Arbeiten ausgeführt werden können. Anschliessend wird das Tableau ohne grossen Montageaufwand in eine Endmontagestellung gebracht, bei der das Tableau bündig mit der Tragstruktur zu liegen kommt.

Im folgenden wird die Erfindung anhand von lediglich einen Ausführungsweg darstellenden Zeichnungen näher erläutert. Es zeigen:
- Fig. 1: ein Tableau mit einem erfindungsgemässen Haltebügel in räumlicher Darstellung,
- Fig. 2: das mit dem Haltebügel verbundene Tableau beim Einsetzen in ein zugehöriges Gehäuse in räumlicher Darstellung,
- Fig. 3: das Tableau in der Vormontagestellung mit Möglichkeiten zum Ausgleich eines schräg eingesetzten Gehäuses,
- Fig. 4: Einzelheiten der lösbaren Verbindung des Haltebügels mit dem Tableau in räumlicher Darstellung,
- Fig. 5.: einen Schnitt entlang der Fläche AB aus der Fig. 4 mit Einzelheiten der lösbaren mittels einer Schnappfeder hergestellten Verbindung zwischen dem Haltebügel und dem Tableau,
- Fig. 6: eine Seitenansicht der Schnappfeder und
- Fig. 7: eine Aufsicht der Schnappfeder.

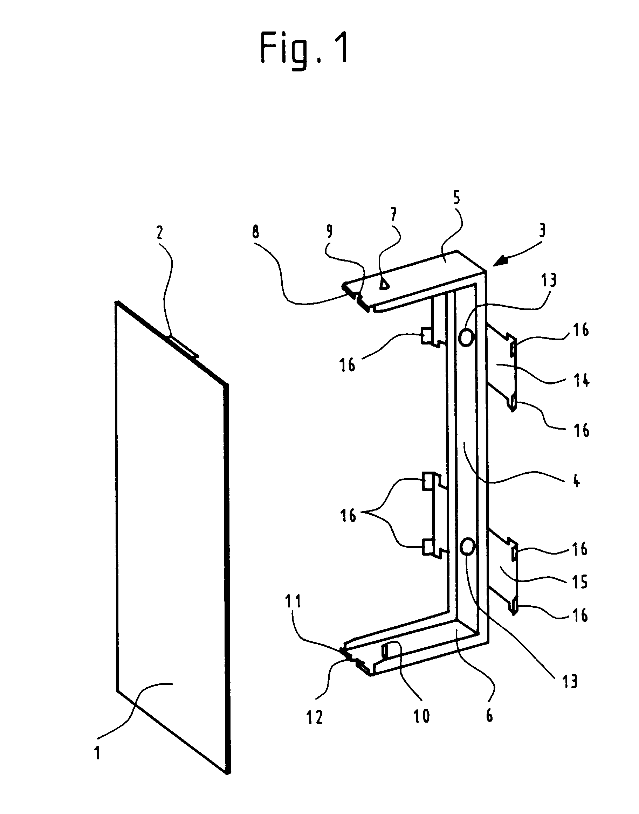

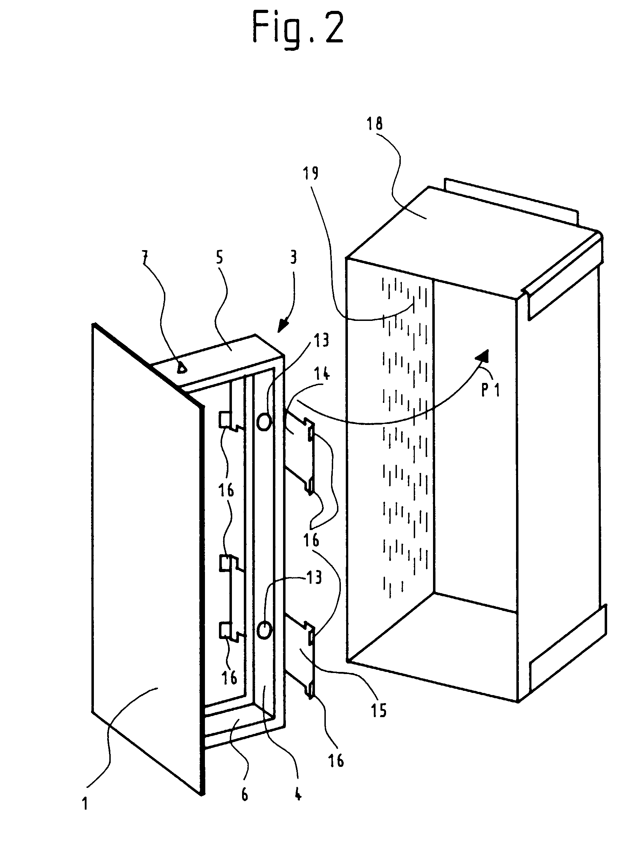

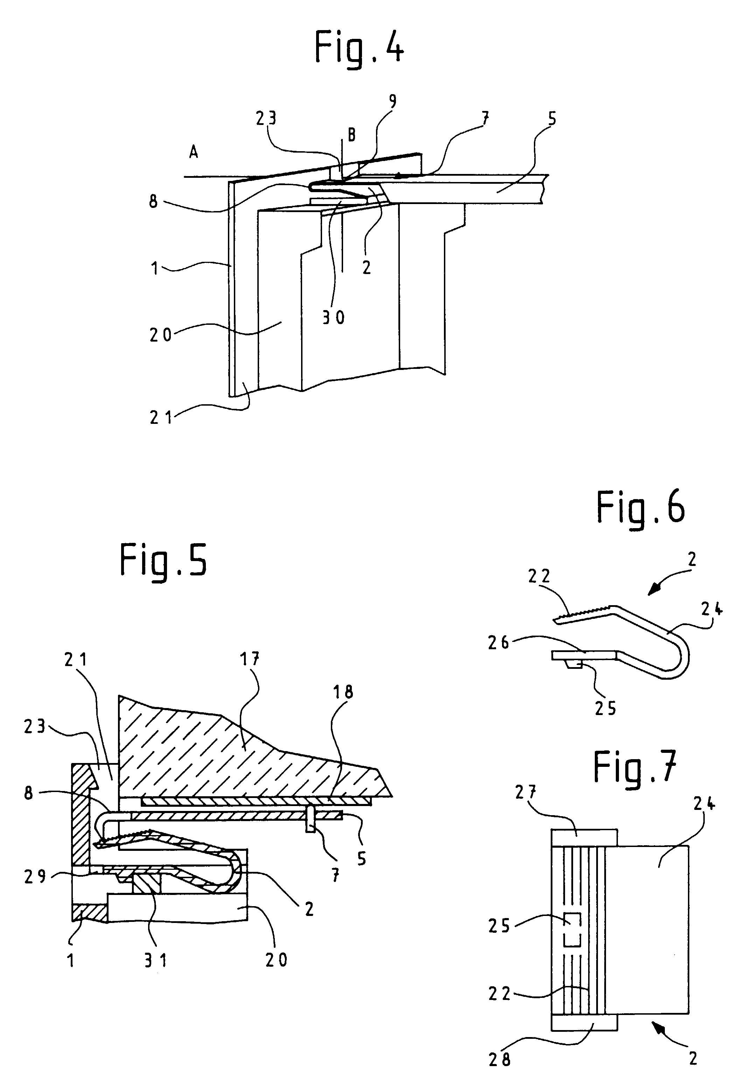

In den Fig. 1 bis 7 ist mit 1 ein Tableau bezeichnet, das mittels einer ersten Schnappfeder 2 und einer nicht dargestellten zweiten Schnappfeder mit einem Haltebügel 3 lösbar verbunden ist. Auf dem Tableau 1 sind nicht dargestellte Befehls- und Meldeelemente wie Schalter, Taster, Lampen, Leuchtdioden, Lautsprecher und Bildschirme angeordnet, deren Verkabelung ebenfalls nicht dargestellt ist. Der U-förmige einstückige Haltebügel 3 besteht aus einem Basisteil 4 und einem ersten Schenkel 5 und einem zweiten Schenkel 6. Am ersten Schenkel 5 ist am dem Basisteil 4 gegenüberliegenden Ende ein erster Stift 7, beispielsweise ein Gewindestift mit Imbuskopf sowie ein erster Haken 8 angeordnet. Der über die Breite des ersten Schenkels 5 verlaufende erste Haken 8 ist mittig von einer ersten Ausnehmung 9 unterbrochen. Am zweiten Schenkel 6 ist am dem Basisteil 4 gegenüberliegenden Ende ein zweiter Stift 10, beispielsweise ein Gewindestift mit Imbuskopf sowie ein zweiter Haken 11 angeordnet. Der über die Breite des zweiten Schenkels 6 verlaufende zweite Haken 11 ist mittig von einer zweiten Ausnehmung 12 unterbrochen. Am Basisteil 4 des Haltebügels 3 sind mittels Schrauben 13 ein erstes Federblech 14 und ein zweites Federblech 15 angeordnet, die je Schmalseite zwei abgewinkelte Federlaschen 16 aufweisen. Bei dem mit einem Pfeil P1 dargestellten Einschieben des mit dem Tableau 1 verbundenen Haltebügels 3 in ein von einer Tragstruktur 17, wie beispielsweise Holz, Mauerwerk, Beton oder Blech gehaltenes Gehäuse 18 gelangen die Federlaschen 16 in einen Laschenbereich 19 mit aufgerauhter Oberfläche, mit der die Federlaschen 16 verhaken.

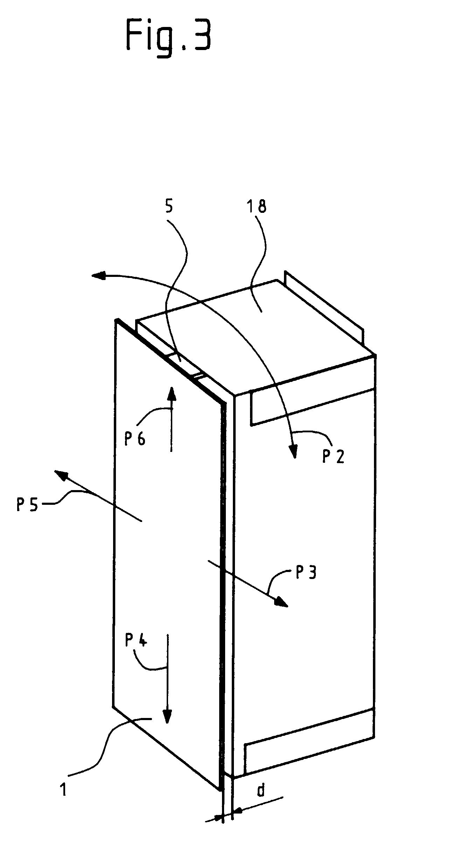

In Fig. 3 ist das Tableau 1 in der Vormontagestellung gezeigt. Dazu wird das Tableau 1 lösbar mit dem Haltebügel 3 verbunden und dieser mit den lose mit dem Basisteil 4 verschraubten Federblechen 14;15 bis auf einen Abstand d in das Gehäuse 18 geschoben, wobei die Federlaschen 16 entgegen der Schieberichtung im Laschenbereich 19 verhaken. Liegt die Gehäusevorderkante tiefer als die Tragstrukturvorderfläche, so bezieht sich der Abstand d auf die Tragstrukturvorderfläche. Obwohl das Tableau 1 in der Vormontagestellung bereits voll funktionsfähig ist, gewährleistet der Abstand d die Ausführung von handwerklichen Arbeiten wie Mauern, Gipsen und Streichen in der unmittelbaren Umgebung der Gehäuseöffnung.

Pfeile P2;P3;P4;P5;P6 symbolisieren Ausgleichsmöglichkeiten des erfindungsgemässen Haltebügels 3 in Verbindung mit den Federblechen 14;15 falls das Gehäuse 18 in der Frontebene und/oder in der Tiefe schräg montiert ist. Nach dem Ausrichten des Tableaus 1 werden die Schrauben 13 festgezogen. Danach wird die aus Tableau 1, Haltebügel 3 und Federblechen 14;15 bestehende Konstruktion bis zur Bündigstellung des Tableaus 1 mit der Tragstrukturvorderfläche vorgeschoben und anschliessend die Stifte 7;10 soweit vorgetrieben, bis sie in das Gehäuse 18 eingreifen. Zur Demontage der Konstruktion wird das Tableau 1 vom Haltebügel 3 getrennt und die Schrauben 13 gelöst. Durch Krafteinwirkung auf die eine Seite des Federblechs 14;15 können die im Laschenbereich verhakten Federlaschen 16 gelöst werden.

Das gehäuseseitig mit einem umlaufenden Rand 20 und einem umlaufenden Flansch 21 versehene Tableau 1 steht an seinen Schmalseiten mittels Schnappfedern 2 in lösbarer Verbindung mit Haken 8;11, die an Rippenteilen 22 der Schnappfedern 2 verhaken. Zum Lösen der Verbindung zwischen dem Haken 8 und der Schnappfeder 2 wird ein Entriegelungsschlüssel durch eine am Flansch 21 angeordnete Nut 23 und durch die erste Ausnehmung 9 bis auf die Schnappfeder 2 geführt und durch weiteres Vorschieben des Entriegelungsschlüssels der Rippenteil 22 vom Haken 8 getrennt.

Die Schnappfeder 2 weist ausser dem Rippenteil 22 einen Federteil 24 und einen mittig eine Nocke 25 tragenden Führungsteil 26 auf, an dem seitlich ein erstes Gleitstück 27 und ein zweites Gleitstück 28 angeordnet sind. Beim Anbringen der Schnappfeder 2 am schmalseitigen Rand 20 gleitet das erste Gleitstück 27 in einer ersten Führung 29 und das zweite Gleitstück 28 in einer zweiten Führung 30 bis die Nocke 25 mit einem Steg 31 des Randes 20 verrastet.

## Patentansprüche

1. Tableau (1) für Unterputzmontage mit einem gehäuseseitig angeordneten, umlaufenden Rand (20) und einem umlaufenden Flansch (21), das mittels Federblechen (14;15) in lösbarer Verbindung mit einem zugehörigen von einer Tragstruktur (17) gehaltenen Gehäuse (18) steht, wobei die Federbleche (14 ; 15) in das Gehäuse (18) einschiebbar sind und das Tableau (1) in lösbarer Verbindung mit Schenkeln (5;6) eines Haltebügels (3) steht
dadurch gekennzeichnet, daß die Federbleche (14;15) an einem Basisteil (4) des Haltebügels (3) angeordnet sind.

2. Tableau nach Anspruch 1,
dadurch gekennzeichnet,
dass die Federbleche (14;15) abgewinkelte Federlaschen (16) aufweisen, die mit dem Gehäuse (18) in einem Laschenbereich (19) mit aufgerauhter Oberfläche verhaken.

3. Tableau nach Anspruch 2,
dadurch gekennzeichnet,
dass der Haltebügel (3) U-förmig einstückig ist und einen ersten Schenkel (5) mit einem ersten Stift (7) und einen zweiten Schenkel (6) mit einem zweiten Stift (10) aufweist.

4. Tableau nach Anspruch 3,
dadurch gekennzeichnet,
dass der erste Schenkel (5) an dem dem Basisteil (4) gegenüberliegenden Ende einen ersten Haken (8) mit einer mittig angeordneten ersten Ausnehmung (9) aufweist und der zweite Schenkel (6) an dem dem Basisteil (4) gegenüberliegenden Ende einen zweiten Haken (11) mit einer mittig angeordneten zweiten Ausnehmung (12) aufweist.

5. Tableau nach einem der vorhergehenden Ansprüche,
dadurch gekennzeichnet,
dass zur Herstellung der lösbaren Verbindung zwischen dem Haltebügel (3) und dem Tableau (1) der Haken (8;11) mit einer am Rand (20) des Tableaus (1) angeordneten Schnappfeder (2) verhakt.

6. Tableau nach Anspruch 5,
dadurch gekennzeichnet,
dass je Schmalseite des Randes (20) Führungen (29;30) und ein Steg (31) angeordnet sind, in denen die Schnappfeder (2) gleitet und mit dem die Schnappfeder (2) verrastet und an einer Schmalseite des Flansches (21) gehäuseseitig eine Nut (23) zum Lösen der Verbindung vorgesehen ist.

7. Tableau nach den Ansprüchen 5 und 6,
dadurch gekennzeichnet,
dass die Schnappfeder (2) einen Rippenteil (22), an dessen Rippen der Haken (8;11) verhakt, einen Federteil (24) und einen Führungsteil (26) aufweist, an dem mittig eine mit dem Steg (31) verrastende Nocke (25) und seitlich ein erstes und zweites Gleitstück (27;28) angeordnet sind, die in den Führungen (29;30) gleiten.

## Claims

1. Panel (1) for recessed mounting and with an encircling rim (20) arranged at the housing side and an encircling flange (21) standing in detachable connection by means of metal spring plates (14; 15) with an associated housing (18) retained by a support structure (17), wherein the metal spring plates (14; 15) are insertable into the housing (18) and the panel (1) stands in detachable connection with limbs (5; 6) of a retaining bracket (3), characterised thereby that the metal spring plates (14; 15) are arranged at a base part of the retaining bracket (3).

2. Panel according to claim 1, characterised thereby that the metal spring plates (14; 15) have bent-over spring tongues (16) which hook into the housing (18) in a tongue region (19) of roughened surface.

3. Panel according to claim 2, characterised thereby that the retaining bracket (3) is U-shaped in one piece and comprises a first limb (5) with a first pin (7) and a second limb (6) with a second pin (10).

4. Panel according to claim 3, characterised thereby that the first limb (5) at its end opposite the base part (4) comprises a first hook (8) with a centrally arranged first recess (9) and the second limb (6) at its end opposite the base part (4) comprises a second hook (11) with a centrally arranged second recess (12).

5. Panel according to one of the preceding claims, characterised thereby that the hook (8; 11) hooks into a snap spring (2), which is arranged at the rim (20) of the panel (1) for the production of the detachable connection between the retaining bracket (3) and the panel (1).

6. Panel according to claim 5, characterised thereby that guides (29; 30) and a web (31), in which the snap spring (2) slides and with which the snap spring (2) detents, are arranged for each narrow side of the rim (20) and a groove (23) for the undoing of the connection is provided on the housing side at one narrow side of the flange (21).

7. Panel according to the claims 5 and 6, characterised thereby that the snap spring (2) comprises a ribbed part (22), into the ribs of which the hook (8; 11) hooks, a spring part (24) and a guide part (26), at which a dog (25) detenting with the web (31) is arranged centrally and a first and a second sliding member (27; 28), which slide in the guides (29; 30), are arranged laterally.

## Revendications

1. Tableau indicateur (1) pour montage encastré, comportant un bord circulaire (20) disposé côté boîtier et un rebord circulaire (21) qui est relié de façon amovible, à l'aide de tôles à ressort (14 ; 15), à un boîtier associé (18) retenu par une structure porteuse (17), étant précisé que les tôles à ressort (14 ; 15) sont aptes à être insérées dans le boîtier (18) et que le tableau indicateur (1) est relié de façon amovible aux branches (5 ; 6) d'un étrier de fixation (3),
caractérisé en ce que les tôles à ressort (14 ; 15) sont disposées sur une partie de base (4) de l'étrier de fixation (3).

2. Tableau indicateur selon la revendication 1, caractérisé en ce que les tôles à ressort (14 ; 15) comportent des pattes coudées faisant ressort (16) qui s'accrochent au boîtier (18) dans une zone de pattes (19) à surface rugueuse.

3. Tableau indicateur selon la revendication 2, caractérisé en ce que l'étrier de fixation (3) est en une seule pièce, en U, et comporte une première branche (5) pourvue d'une première tige (7) et une seconde branche (6) pourvue d'une seconde tige (10).

4. Tableau indicateur selon la revendication 3, caractérisé en ce que la première branche (5) comporte, sur son extrémité opposée à la partie de base (4), un premier crochet (8) pourvu, au milieu, d'un premier creux (9), tandis que la seconde branche (6) comporte, sur son extrémité opposée à la partie de base (4), un second crochet (11) pourvu, au milieu, d'un second creux (12).

5. Tableau indicateur selon l'une des revendications précédentes, caractérisé en ce que pour réaliser la liaison amovible entre l'étrier de fixation (3) et le tableau (1), le crochet (8 ; 11) s'accroche à un ressort à déclic (2) disposé au bord (20) du tableau indicateur (1).

6. Tableau indicateur selon la revendication 5, caractérisé en ce qu'il est prévu, sur chaque côté étroit du bord (20), des guidages (29 ; 30) dans lesquels le ressort à déclic (2) coulisse, et une nervure (31) avec laquelle le ressort à déclic (2) s'accroche, et en ce qu'il est prévu, sur un côté étroit du rebord (21), côté boîtier, une rainure (23) pour supprimer la liaison.

7. Tableau selon les revendications 5 et 6, caractérisé en ce que le ressort à déclic (2) comporte une partie nervurée (22) aux nervures de laquelle s'accroche le crochet (8 ; 11), un élément formant ressort (24) et un élément de guidage (26) sur lequel sont prévus, au milieu, une saillie (25) qui s'enclenche avec la nervure (31) et, latéralement, des premier et second coulisseaux (27 ; 28) qui coulissent dans les guidages (29 ; 30).
